(19) Europäisches Patentamt
European Patent Office
Office européen des brevets

(11) **EP 3 463 741 B1**

(12) **EUROPÄISCHE PATENTSCHRIFT**

(45) Veröffentlichungstag und Bekanntmachung des Hinweises auf die Patenterteilung:
**19.01.2022 Patentblatt 2022/03**

(21) Anmeldenummer: **17726223.5**

(22) Anmeldetag: **16.05.2017**

(51) Internationale Patentklassifikation (IPC):
**B23K 26/03** *(2006.01)*    **G01B 5/00** *(2006.01)*
**G01B 11/22** *(2006.01)*    **B23K 26/21** *(2014.01)*

(52) Gemeinsame Patentklassifikation (CPC):
**B23K 26/032; B23K 26/21; G01B 11/026;
G01B 11/22**

(86) Internationale Anmeldenummer:
**PCT/EP2017/061673**

(87) Internationale Veröffentlichungsnummer:
**WO 2017/207261 (07.12.2017 Gazette 2017/49)**

(54) **VORRICHTUNG ZUR PROZESSÜBERWACHUNG BEI DER LASERBEARBEITUNG MIT EINER OPTISCHEN ABSTANDMESSVORRICHTUNG UND EINER PRISMEN-ABLENKEINHEIT ; LASERBEARBEITUNGSKOPF MIT EINER SOLCHEN VORRICHTUNG**

DEVICE FOR PROCESS MONITORING DURING LASER PROCESSING COMPRISING AN OPTICAL DISTANCE MEASURING DEVICE AND A PRISM DEFLECTION UNIT; LASER PROCESSING HEAD COMPRISING SUCH A DEVICE

DISPOSITIF DE SURVEILLANCE DE PROCESSUS LORS DE L'USINAGE LASER COMPRENANT UN DISPOSITIF DE MESURE DE DISTANCE OPTIQUE ET UNE UNITÉ DE DÉFLEXION À PRISMES, TÊTE D'USINAGE LASER ÉQUIPÉE D'UN TEL DISPOSITIF

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **30.05.2016   DE 102016109909**

(43) Veröffentlichungstag der Anmeldung:
**10.04.2019   Patentblatt 2019/15**

(73) Patentinhaber: **Precitec GmbH & Co. KG
76571 Gaggenau (DE)**

(72) Erfinder: **MOSER, Rüdiger
76316 Malsch (DE)**

(74) Vertreter: **Ter Meer Steinmeister & Partner
Patentanwälte mbB
Nymphenburger Straße 4
80335 München (DE)**

(56) Entgegenhaltungen:
**WO-A1-2015/039741      DE-A1- 3 940 694
US-A- 5 763 853      US-A1- 2004 007 563**

**Beschreibung**

Die Erfindung betrifft eine Vorrichtung zur Prozessüberwachung bei der Laserbearbeitung, insbesondere beim Laserschweißen und Lasertiefschweißen mittels optischer Abstandsmessung, siehe den Oberbegriff des Anspruchs 1 (siehe z.B. WO 2015/039741 A1).

Die Abstandsmessung kann dabei insbesondere durch optische Kohärenztomographie erfolgen. Für die Abstandsmessung zur Prozessüberwachung wird ein Messstrahl üblicher Weise koaxial mit einem Bearbeitungsstrahl überlagert. Um verschiedene Messaufgaben, wie z.B. Finden der Keyholeöffnung, Messen der Einschweißtiefe, also der Keyholetiefe, Referenzmessung auf dem Oberblech, Topographiemessung im Vorlauf, z.B. für Nahtfindung und Nahtverfolgung, Topographiemessung im Nachlauf, z.B. Vermessen der Nahtoberraupe zur Fehlererkennung und Qualitätssicherung, und der gleichen, durchführen zu können, ist es erforderlich, den Auftreffpunkt des optischen Messstrahls auf dem Werkstück, also den Messfleck genau positionieren zu können. Dazu muss der Messstrahl, der durch einen Laserbearbeitungskopf, insbesondere durch einen Laserschweißkopf oder Laserschweißscanner hindurch geführt wird, präzise lateral ausgelenkt werden können.

Die anspruchsvollste der oben genannten Messaufgaben ist dabei die Messung der Einschweißtiefe, also die Messung der Tiefe der sich beim Schweißen im Wechselwirkungsbereich zwischen Arbeitslaserstrahl und Werkstück bildenden Dampfkapillare, dem sogenannten Keyhole. Abhängig von Prozessparametern, wie Fokusdurchmesser des Arbeitslaserstrahls, Laserleistung, Vorschubgeschwindigkeit, Material, usw. weist ein Keyhole einen typischen Öffnungsdurchmesser von wenigen hundert Mikrometern auf und kann in Spezialfällen auch deutlich kleiner sein. Um ein optimales Tiefensignal von dem Keyholeboden zu erhalten, muss der Fokus des Messstrahls mit einer lateralen Genauigkeit von weniger als 25 $\mu$m auf die zuvor experimentell bestimmte Keyholeöffnung ausgerichtet werden. Die optimale Position befindet sich typischerweise im Nachlauf zum Arbeitslaserstrahl und hängt von der Vorschubrichtung und der Vorschubgeschwindigkeit ab. Insbesondere beim Laserschweißen mit Scannern, also mit Laserbearbeitungsköpfen, bei denen der Arbeitsfokus z.B. mit einem gesteuerten Schwingspiegel quer zur Bearbeitungslinie periodisch ausgelenkt wird, aber auch beim richtungsunabhängigen Schweißen mit Festoptiken ist eine ständige präzise und schnelle Anpassung der Messfleckposition relativ zum Arbeitslaserstrahl erforderlich.

In periodischen Abständen muss der Messfleck zusätzlich auf das Oberblech gelenkt werden, um dort Abstandsmessungen durchzuführen. Aus der Differenz zwischen dem Abstand zum Oberblech und dem Abstand zum Keyholeboden kann die tatsächliche Keyholetiefe und somit die Einschweißtiefe bestimmt werden. Wird die Keyholeöffnung und damit der Keyholeboden jedoch nicht exakt getroffen, dann erfasst das Messsystem einen falschen Abstandswert und der Anwender erhält die Information einer falschen Einschweißtiefe, so dass das betreffende Bauteil in der Regel als nicht in Ordnung aussortiert wird.

Für die oben genannten Topographiemessungen im Vor- und Nachlauf muss der Messstrahl quer zur Bearbeitungslinie schnell und genau ausgelenkt werden, um die Topographie der Werkstückoberfläche abtasten zu können. Abhängig von der Messaufgabe erfolgt die seitliche Ablenkung über einen Bereich von wenigen bis zu einigen zehn Millimetern.

Somit werden zur Bewältigung der oben genannten Messaufgaben zwei komplementäre Anforderungen an die Ablenkeinheit für den Messstrahl gestellt. Sie muss ein schnelles und hochdynamisches Ablenken des Messstrahls und ein präzises reproduzierbares Positionieren des Messflecks auf vorbestimmte Positionen gewährleisten. Dabei soll das präzise reproduzierbare Positionieren auch über längere Zeiträume, also über mehrere Tage bis einigen Wochen möglich sein.

Üblicherweise werden Lichtstrahlen über Spiegeloptiken abgelenkt. Als Antriebe kommen Galvo-Motoren, Piezo-Antriebe, MEMS (Microelectromechanical systems), oder andere motorische Antriebe zum Einsatz, die eine definierte Drehbewegung des Ablenkspiegels hervorrufen.

Bei der Reflektion an einem Spiegel gilt das Reflexionsgesetz, also Einfallswinkel = Ausfallswinkel. Das bedeutet, dass wenn sich der Spiegelwinkel um den Winkel $\Phi$ ändert, sich die Ablenkung des Lichtstrahls um $2 \cdot \Phi$ ändert. Somit können einerseits große Ablenkwinkel erreicht werden, andererseits werden aber auch Drift und Ungenauigkeiten des Antriebs um den Faktor zwei verstärkt. Im Folgenden werden Vor- und Nachteile möglicher Antriebe kurz erläutert: Vorteile von Galvanometer-Antrieben (Galvo-Motoren) sind große Auslenkwinkel ($\approx 0{,}35$ rad), sehr gute Reproduzierbarkeit ($\approx 2$ $\mu$rad), hohe Dynamik, also schnelle Schwenk- und Positionierbarkeit und bei Verwendung großer Spiegel große Aperturen. Nachteilig sind insbesondere bei analogen Positionsdetektoren hohe Langzeit- und Temperaturdriftwerte. Im Fall von analogen Positionsdetektoren zeigen typische Galvo-Scanner eine Langzeitdrift im Bereich von bis zu 600 $\mu$rad. Hinzu kommt ein temperaturabhängiger Drift, der typischerweise im Bereich von 15 $\mu$rad/K liegt. Da in Produktionsumgebungen die Temperatur normalerweise nicht konstant gehalten werden kann, ergeben sich schnell Driftwerte von bis zu mehreren einhundert $\mu$rad, wobei die Ablenkung des optischen Lichtstrahls aufgrund des Reflektionsgesetzes einen doppelt so hohen Drift erfährt. Dieser Drift ist insbesondere in Kombination mit einer Spiegeloptik bereits zu groß, um die oben genannte Messung der Keyholetiefe zuverlässig und stabil durchzuführen.

Mittlerweile werden von diversen Herstellern auf dem Markt auch digitale Positionsdetektoren angeboten, deren Langzeitdriftwerte um ca. eine Größenordnung geringer sind, wobei die Kosten für ein System aktuell jedoch noch deutlich höher sind. Auch die verbesserten Langzeitdriftwerte können keinen zuverlässigen und stabilen Betrieb garantieren, da trotz des digitalen Positionsdetektors stets ein temperaturabhängiger Drift hinzukommt.

Die recht kompakten Piezo-Scanner besitzen ebenfalls eine sehr gute Winkelauflösung, ermöglichen jedoch oft nur einen geringen Auslenkwinkel von weniger als 10 mrad. Modelle mit größerem Auslenkwinkel sind zwar auch auf dem Markt verfügbar, allerdings sind die Kosten für solche Piezo-Scanner sehr hoch. Ferner wird die maximale Spiegelgröße und somit die Apertur des Messstrahls durch die kompakte Bauform begrenzt. Langzeit- und Temperaturdriftwerte werden selten angegeben.

MEMS (Microelectromechanical systems) weisen als Ablenkeinheit eine extrem kompakte Bauform auf, wodurch die maximale Apertur in der Regel im Bereich zwischen 1 bis 4 mm sehr begrenzt ist. Weiterhin werden diese Bauteile häufig im resonanten Modus betrieben, der Umlenkspiegel schwingt also mit seiner Resonanzfrequenz. Um einen Winkel statisch einstellen und halten zu können, sind sogenannte quasistatische MEMS notwendig, deren Herstellung aufwändiger und damit auch teurer ist.

Zur Realisierung der oben genannten Einschweißtiefen- und/oder Topographiemessung ist es erforderlich, den Messstrahl durch einen Laserbearbeitungskopf, insbesondere durch einen Laserschweißkopf oder durch einen Laserschweißscanner zu führen, um ihn koaxial mit dem Bearbeitungsstrahl zu überlagern. Das bedeutet, dass für die Fokussierung des Messstrahls das Fokuselement des Laserbearbeitungskopfes verwendet wird. Dieses weist in der Regel Fokussierbrennweiten im Bereich von 150 bis 1000 mm auf. Um das Messlicht auf der Werkstückoberfläche zu positionieren und insbesondere in die Keyholeöffnung zu fokussieren, und um bei der Topographiemessung eine hohe laterale Auflösung zu erhalten, ist eine geringe Fokusgröße im Bereich von einigen zehn µm erforderlich. Aufgrund der gegebenen großen Fokussierbrennweite ist hierfür ein ausreichend großer Durchmesser des kollimierten Messstrahls erforderlich. Somit sind MEMS basierte Spiegel für diese Aufgabe ungeeignet. Piezo-Scanner besitzen hingegen häufig einen zu geringen Auslenkwinkel, der insbesondere bei der oben genannten Topographiemessung nicht ausreicht. Galvo-Scanner sind hingegen von ihrem Winkelbereich, der Positionsgenauigkeit und Spiegelgröße gut geeignet. Allerdings besitzen sie das angesprochene Problem der großen Driftwerte.

Aus der DE 40 26 130 C2 ist eine Einrichtung zur Ablenkung eines Lichtstrahls über zwei Umlenkspiegel bekannt, die um eine Drehachse unabhängig voneinander gedreht werden können. Da die Ablenkung des Laserstrahls mittels Spiegel erfolgt, gilt hier das Reflexionsgesetz. Das bedeutet, dass wenn sich ein Spiegel um den Winkel $\Phi$ dreht, sich die Ablenkung des Lichtstrahls um $2 \cdot \Phi$ ändert. Somit werden Drift und Ungenauigkeiten der entsprechenden Spiegelantriebe jeweils um den Faktor zwei verstärkt.

Aus der DE 44 41 341 C2 ist ein Trommelbelichter oder -scanner bekannt, bei dem ein kippbares Prisma in einem kollimierten Strahlengang angeordnet ist, um die Fokusposition zur Feinjustage oder Vorjustage quer zur optischen Achse des Strahlengangs zu verschieben. Die eigentliche dynamische Strahlablenkung erfolgt durch eine Spiegeloptik an einem Drehmotor.

Aus der DE 10 2008 032 751 B3 ist eine Laserbearbeitungsvorrichtung bekannt, bei der zwei Prismen in jeweils einem kollimierten Laserstrahl zur Feinjustage und Ausrichtung der beiden kollimierten Laserstrahlen in einem Punkt im Raum zwischen zwei Ablenkspiegeln eines Galvonscanners verwendet werden. Die zur Laserbearbeitung mit Doppel- oder Mehrfachspot notwendige dynamische Auslenkung erfolgt über die Spiegeloptik des Galvoscanners.

Die DE 20 2008 017 745 U1 betrifft eine Vorrichtung zum Führen eines Lichtstrahls und beschreibt die Verwendung einer rotierend angetriebenen und im Kippwinkel verstellbaren Planplatte in einem konvergenten Strahlengang, sowie die Verwendung einer optischen Gruppe mit zueinander zugewandten komplementären sphärischen Oberflächen. Die Verwendung einer Planplatte im konvergenten Strahlengang hat jedoch signifikante Abbildungsfehler zur Folge, die für Abstandsmessungen nachteilig sind.

Die DE 43 91 446 C2 betrifft einen Laserstrahl-Scanner und beschreibt die Verwendung eines rotierend angetriebenen Prismas zum Ablenken eines kollimierten Laserstrahls, um eine Kreisförmige Bahn zu erhalten. Die Rotation des Prismas erfolgt um die optischen Achse herum. Der Ablenkwinkel des Laserstrahls bleibt dabei konstant.

Die DE 198 17 851 C1 betrifft ein Verfahren zum Ablenken eines Laserstrahls und beschreibt die Verwendung von zwei Keilplatten mit demselben Keilwinkel, die unabhängig voneinander um die optische Achse drehbar angeordnet sind. Somit lässt sich jeder Punkt auf einer durch die Keilwinkel vorgegebenen Kreisfläche gezielt ansteuern. Dieses Verfahren ist auch unter dem Namen Risley-Prismen Scanner bekannt. Um ein lineares Scanmuster zu erhalten, müssen beide Keilplatten mit vordefinierten Winkelgeschwindigkeiten gedreht werden.

In der DE 10 2016 005 021 A1 ist eine Vorrichtung zur Messung der Tiefe der Dampfkapillare während eines Bearbeitungsprozesses mit einem Hochenergiestrahl gezeigt, bei der ein kollimierter Messlichtstrahl auf eine Keilplatte trifft, die von einem Motor um eine Drehachse gedreht werden kann. Die Drehachse steht dabei senkrecht zu einer ersten Planfläche und quer zum Messlichtstrahl. Die erste Planfläche wirkt somit als Umlenkspiegel und erzeugt einen ersten Messlichtstrahl, dessen Richtung ebenfalls unveränderlich ist. Die zweite Planfläche schließt mit der Drehachse einen von 90 Grad verschiedenen Winkel mit der Drehachse ein. Auf diese Weise wird ein zweiter Messlichtstrahl erzeugt, der gegenüber dem ersten Messlichtstrahl entsprechend dem Keilwinkel der Keilplatte geneigt ist. Die Ausbreitungsrichtung des zweiten Messlichtstrahls hängt dabei von der Orientierung der Keilplatte ab. Auf der Oberfläche eines Werkstücks lassen sich auf diese Weise zwei Messpunkte erzeugen, die unabhängig vom Drehwinkel der Keilplatte stets den gleichen Abstand voneinander aufweisen. Über den Drehwinkel der Keilplatte lässt sich der zweite Messlichtfleck auf einer Kreisbahn um den ersten Messlichtfleck herum bewegen.

Aus der JP 10-034366 A ist eine Laserstrahlbearbeitungsvorrichtung bekannt, bei der ein Arbeitslaserstrahl von einer Linse in einem Brennpunkt fokussiert wird. Ein Beobachtungsstrahlengang wird von einem Kollimator kollimiert und trifft nacheinander auf eine Keilplatte, deren erste Fläche senkrecht zum einfallenden Messlichtstrahl steht. In Strahlrichtung hinter der Keilplatte ist eine planparallele Platte angeordnet, die gegen beide Flächen der Keilplatte geneigt ist. Werden die Keilplatte und die planparallele Platte gemeinsam um die optische Achse gedreht, so wandert ein Messlichtfleck auf einer entsprechenden Kreisbahn um die optische Achse herum.

Der Erfindung liegt die Aufgabe zugrunde, eine Vorrichtung zur Prozessüberwachung bei der Laserbearbeitung bereit zu stellen, bei der ein optischer Messstrahl, der insbesondere durch einen Laserbearbeitungskopf hindurch geführt ist, zur Positionierung eines Messflecks auf einer Werkstückoberfläche schnell und präzise reproduzierbar ausgelenkt werden kann.

Diese Aufgabe wird durch die Vorrichtung nach Patentanspruch 1 gelöst. Vorteilhafte Ausgestaltungen und Weiterbildungen der Erfindung sind in den Unteransprüchen beschrieben.

Erfindungsgemäß ist also bei einer Vorrichtung zur Prozessüberwachung bei der Laserbearbeitung, insbesondere beim Laserschweißen und Lasertiefschweißen, eine optischen Abstandsmessvorrichtung, die eine Messlichtquelle zur Erzeugung eines Messlichtstrahls aufweist, der auf eine Werkstückoberfläche zur Bildung eines Messlichtflecks fokussiert wird, und eine Prismen-Ablenkeinheit vorgesehen, die zumindest ein Prisma aufweist, das um eine quer zum Messlichtstrahl verlaufende Achse drehbar gelagert ist und das den Messlichtstrahl zur Positionierung des Messlichtflecks auf der Werkstückoberfläche lateral ablenkt. Hierdurch lässt es sich erreichen, dass Abweichungen von einer gewünschten Stellung des Prismas nur einen minimierten Einfluss auf die Ablenkgenauigkeit des Messlichtstrahls haben, da große Drehbewegungen des Prismas nur relativ kleine Ablenkungen des Messlichtstrahls zur Folge haben.

Um den Messlichtstrahl über einen zweidimensionalen Mess- oder Beobachtungsbereich führen zu können, ist es zweckmäßig, wenn die Prismen-Ablenkeinheit zwei Prismen aufweist, die im Winkel von 90° zueinander angeordnet sind, und die beide um eine quer zum Messlichtstrahl verlaufende Achse drehbar gelagert sind, wobei das oder die Prismen von jeweils von einem Stellantrieb gedreht werden können, die unabhängig voneinander ansteuerbar sind.

Um eine schnelle und hochdynamische Ablenkung des Messlichtstrahls für die verschiedensten Messaufgaben zu gewährleisten, ist es vorteilhaft, wenn als Stellantrieb ein Galvo-Motor vorgesehen ist. Galvo-Motoren sind zuverlässige und gut zu steuernde Antriebe, deren Drift aufgrund der optischen Untersetzung durch das oder die Prismen nur noch einen geringen Einfluss auf die Positioniergenauigkeit haben.

Zweckmäßigerweise ist die Prismen-Ablenkeinheit in einem parallelen Abschnitt des Messlichtstrahls, insbesondere zwischen einer Kollimatoroptik und einer Fokussieroptik angeordnet ist, wobei die Kollimatoroptik gegen die optische Achse der Fokussieroptik geneigt ist. Auf diese Weise wird erreicht, dass der Messlichtstrahl nach der Ablenkung durch das oder die Prismen im wesentlichen parallel zur optischen Achse der Fokussieroptik verläuft.

Bei einer vorteilhaften Ausgestaltung der Erfindung ist vorgesehen, dass das oder die Prismen der Prismen-Ablenkeinheit mit einer oder mehreren Antireflexschichten versehen sind, wobei deren Transmission für einen großen Winkelbereich ausgelegt ist. Da auf diese Weise eine Transmission nahe 100% zu erreichen ist, erfährt das Messlicht praktisch keine Verluste und das Messen größerer Einschweißtiefen wird möglich. Ferner treten keine Interferenzen innerhalb der Optik auf, die zu Störsignalen im Messsystem führen könnten.

Die erfindungsgemäße Vorrichtung zur Prozessüberwachung bei der Laserbearbeitung, insbesondere beim Laserschweißen und Lasertiefschweißen lässt sich mit einem Laserbearbeitungskopf, insbesondere mit einem Laserschweißkopf oder Laserschweißscanner verwenden, durch den ein Bearbeitungslaserstrahl geführt ist und in dem einer Fokussieroptik angeordnet ist, die den Bearbeitungslaserstrahl in einen Arbeitsfokus auf einem Werkstück fokussiert. Dabei wird der Messlichtstrahl dem Bearbeitungslaserstrahl überlagert, in dem er über einen Strahlteiler in den Bearbeitungslaserstrahl eingekoppelt wird. Die Prismen-Ablenkeinheit ist dabei zwischen einer Kollimatoroptik und dem Strahlteiler angeordnet.

Die Erfindung wird im folgenden beispielsweise anhand der Zeichnung näher erläutert. Es zeigen:

Figur 1 eine schematische vereinfachte Darstellung eines Laserbearbeitungskopfes mit einer integrierten Vorrichtung zur Prozessüberwachung bei der Laserbearbeitung gemäß der vorliegenden Erfindung,

Figur 2a und 2b jeweils eine vereinfachte schematische Darstellung eines Messstrahlengangs einer Vorrichtung zur Prozessüberwachung bei der Laserbearbeitung,

Figur 3 eine Darstellung der Ablenkung eines Lichtstrahls durch ein Prisma zur Erläuterung des Funktionsprinzips einer Prismen-Ablenkeinheit,

Figur 4 eine Darstellung eines Strahlversatzes in der Bearbeitungsebene in Abhängigkeit vom Kippwinkel des Prismas der Prismen-Ablenkeinheit,

Figur 5a ein schematische Darstellung einer Ablenkeinheit mit Spiegeloptik,

Figur 5b eine Darstellung ähnlich Figur 3 zum Vergleich einer Prismen-Ablenkeinheit mit einer Spiegel-Ablenkeinheit,

Figur 6 eine Darstellung des Strahlversatzes in Abhängigkeit vom Drehwinkel eines Spiegel- bzw. Prismen-Antriebs,

Figur 7 gemessene und simulierte Strahlprofile im Focus eines Messstrahls mit und ohne Prisma,

Figur 8 simulierte Stahlprofile im Focus eines Messstrahls, der mittels zwei hintereinander geschalteter Prismen ablenkbar ist.

In den verschiedenen Figuren der Zeichnung sind einander entsprechende Element mit gleichen Bezugszeichen versehen.

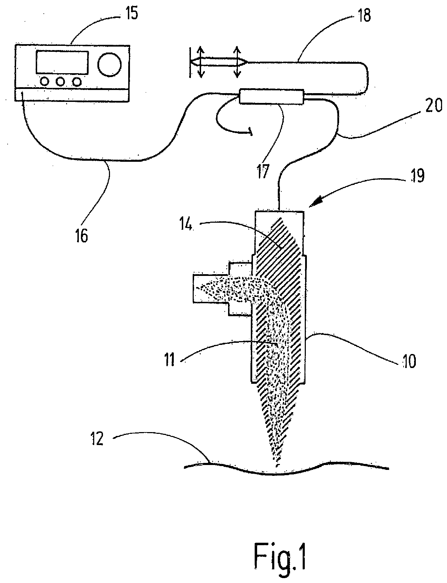

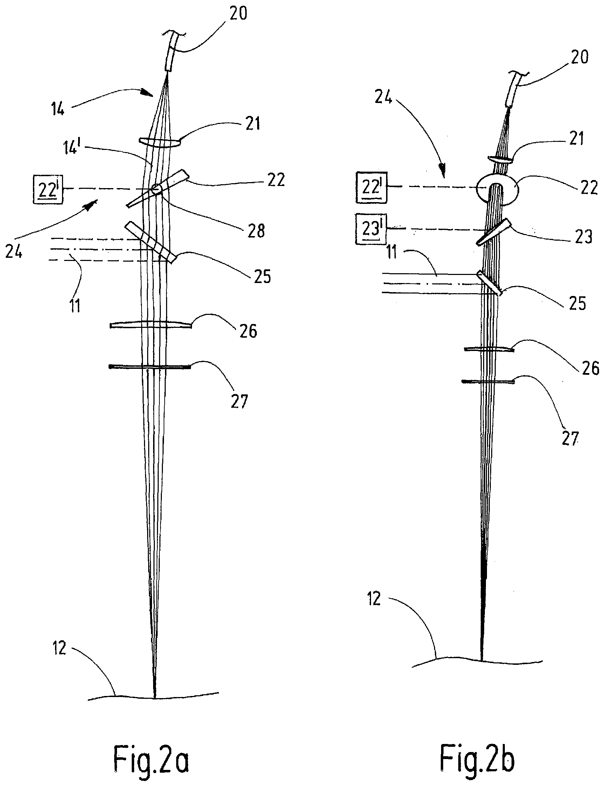

Figur 1 zeigt schematisch einen Laserbearbeitungskopf 10 durch den hindurch ein Bearbeitungslaserstrahl 11 auf die Oberfläche eines Werkstücks 12 geführt ist. Der Laserbearbeitungskopf 10 kann dabei insbesondere ein Laserschweißkopf oder ein Laserschweißscanner sein. Im Laserbearbeitungskopf 10 ist dem Bearbeitungslaserstrahl 11 ein Messlichtstrahl 14 überlagert, der unten anhand von Figur 2a und 2b näher erläutert wird. Das Messlicht wird von einer nicht näher dargestellten, in einer Auswerteeinheit 15 einer Vorrichtung zur Prozessüberwachung integrierten Lichtquelle über einen Lichtwellenleiter 16, einen Strahlteiler 17 und einen weiteren Lichtwellenleiter 20 an den Laserbearbeitungskopf 10 geführt. Wird die Abstandsmessung gemäß der Kohärenztomografie durchgeführt, so wird im Strahlteiler 17, der vorzugsweise einen Faserkoppler aufweisen kann, das Messlicht aufgespalten und einem Referenzarm 18 und einem Messarm 19 zugeführt, der den Lichtwellenleiter 20 und den Strahlengang des Messlichts im Laserbearbeitungskopf 10 umfasst.

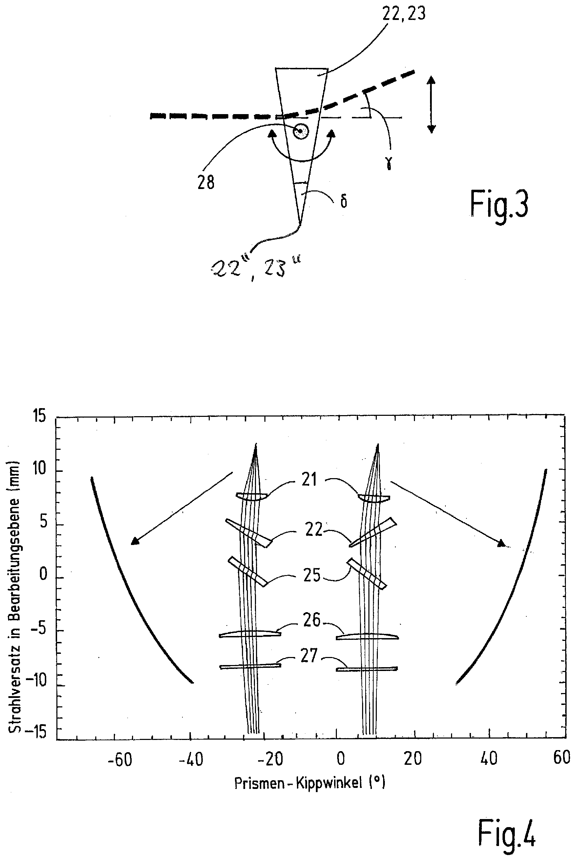

Wie in Figur 2a gezeigt, wird das Messlicht, das aus der Endfläche des Lichtwellenleiters 20 divergent austritt, von einer Kollimatoroptik 21 kollimiert, um einen parallelen Messlichtstrahl 14' zu erhalten. Der parallele Messlichtstrahl 14' wird von einem Prisma 22 einer Prismen-Ablenkeinheit 24 abgelenkt und trifft auf einen Stahlteiler 25, über den der Bearbeitungslaserstrahl 11 mit dem Messlichtstrahl 14 überlagert wird, wie in Figur 2a gestrichelt angedeutet ist. Der Bearbeitungslaserstahl 11 und der parallele Messlichtstahl 14' werden dann von einer gemeinsamen Fokussieroptik 26, vor der strahlaustrittsseitig ein Schutzglas 27 angeordnet ist, in einem Bearbeitungsfokus bzw. einen Messfleck fokussiert. Die brechende Kante 22" des Prismas 22, also die Schnittlinie seiner beiden brechenden Flächen, die den Keil- oder Scheitelwinkel $\delta$ des Prismas einschließen (siehe Figur 3), verläuft dabei parallel zur Drehachse 28, so dass sich durch Drehen des Prismas 22 sein Kippwinkel, also der Winkel seiner beiden brechenden Flächen gegenüber dem einfallenden Lichtstrahl (optische Achse der Kollimatoroptik 21) gezielt verändern lässt. Über den Kippwinkel des Prismas 22 relativ zur optischen Achse des Bearbeitungsstrahlengangs, der mittels eines Stellantriebs 22' eingestellt werden kann, lässt sich die Position des Messflecks relativ zum Bearbeitungsfokus gezielt verschieben.

Um eine Positionierung des Messflecks relativ zum Bearbeitungsfokus sowohl in Vorschubrichtung als auch senkrecht dazu zu realisieren, weist die Strahlführungsoptik für den Messlichtstrahl 14 zusätzlich zu dem Prisma 22 ein zweites Prisma 23 auf, das so angeordnet ist, dass sein Keilwinkel, also seine brechende Kante 23" senkrecht zum Keilwinkel, also zur brechenden Kante 22" des ersten Prismas 22 verläuft. Auch die Drehachsen 28 der beiden Prismen 22, 23, die parallel zu deren brechenden Kanten 22", 23" angeordnet sind, verlaufen somit senkrecht zu einander. Beide Prismen 22, 23 können durch zugeordnete Stellantriebe 22', 23', die unabhängig voneinander angesteuert werden können, in gewünschter Weise gedreht oder gekippt und damit eingestellt werden.

Erfindungsgemäß wird also als ablenkendes Strahlelement keine Spiegeloptik verwendet, sondern ein oder zwei Prismen 22, 23, also eine transmissive Prismenoptik. Somit wird nicht, wie bei einer Spiegeloptik, die mechanische Drehbewegung eines Spiegels aufgrund des Reflexionsgesetzes in eine doppelt so große optische Strahlablenkung umgewandelt, was einer optischen Übersetzung entspricht. Die mechanische Drehbewegung wird hingegen untersetzt und hat eine kleinere optische Ablenkung zur Folge.

In Kombination mit einem rotierenden und schnell positionierbaren Antrieb, wie beispielsweise einem Galvo-Motor, ergeben sich für die oben genannten Messaufgaben folgende Vorteile:
Die vorhandenen Driftbewegungen des als Stellelement für das Prisma 22 dienenden Galvo-Motors (nicht gezeigt) werden optisch untersetzt, so dass ein Wegdriften der Messfleckposition aus der Dampfkapillare verhindert werden kann. Das für die Topographiemessung im Vor- und Nachlauf notwendige Scan- oder Abtastfeld kann trotz der Untersetzung vollständig abgetastet werden. Durch die optische Untersetzung arbeitet der Galvo-Motor in seinem vollen Winkelbereich und kann optimal ausgenutzt werden. Das oder die Prismen 22, 23 der Prismenoptik lassen sich auch mit anderen Antriebskonzepten wie beispielsweise Piezoantrieben, Bandantrieben usw. kombinieren.

In Figur 3 ist das Prisma 22, 23 gezeigt, das um eine Drehachse 28 (senkrecht zu Zeichnungsebene), die senkrecht zur nicht gezeigten optischen Achse des Messlichtstrahlengangs verläuft, dreh- oder kippbar gelagert ist, um die Funktionsweise einer eindimensionalen Prismen-Ablenkeinheit zu veranschaulichen. Das Prisma 22, 23 kann von einem ebenfalls nicht dargestellten Drehantrieb gedreht werden.

Mit Hilfe des Brechungsgesetzes und geometrischen Beziehungen ergibt sich die aus der Literatur bekannte Gleichung für den Gesamtablenkwinkel eines Prismas

tur bekannte Gleichung für den Gesamtablenkwinkel eines Prismas

Dabei bezeichnet $\alpha 1$ den Einfallswinkel zur Flächennormalen, $n_1$ und $n_2$ die Brechungsindizes des Umgebungsmediums bzw. des Prismenmaterials und $\delta$ den Scheitelwinkel des Prismas.

Der minimale Ablenkwinkel liegt bei symmetrischem Lichtdurchgang vor. Hierfür gilt

$$\gamma_{\min} = 2\arcsin\left(\frac{n_1}{n_2}\sin\frac{\delta}{2}\right) - \delta$$

.

Weicht der Lichtdurchgang hiervon ab, so vergrößert sich der Ablenkwinkel sowohl bei positiver als auch negativer Drehung des Prismas 22, 23. Dieses Verhalten ist in Figur 4 anhand einer 1D (eindimensionalen)-Prismen-Ablenkeinheit dargestellt, die zwischen dem Kollimator 21 und dem 45° Strahlteiler 24 angeordnet ist. Da ein Prisma unabhängig vom Prismenwinkel den Strahl immer in die gleiche Richtung ablenkt, ist die optische Achse des Kollimators 21 gegen die optische Achse der Fokusieroptik 25 geneigt, so dass im Bezugssystem der Bearbeitungsebene, also der Werkstückoberfläche der Strahl von einer gewählten Nullposition sowohl in positive, als auch negative Richtung ausgelenkt werden kann. Wie aus der Figur 4 und der obigen Gleichung ersichtlich ist, ergibt sich kein linearer Zusammenhang zwischen Kippwinkel und Strahlversatz in der Bearbeitungsebene. Durch eine Korrekturfunktion in der Ansteuerung des Antriebs kann dieses Verhalten jedoch korrigiert werden.

Die Figur 4 zeigt das Ergebnis einer Simulation des Strahlversatzes in der Bearbeitungsebene als Funktion des Dreh- oder Kippwinkels der Prismenoptik der Strahlablenkeinheit für einen Laserbearbeitungskopf mit einer Fokussier-Brennweite von f=300 mm. Die Kollimationseinheit, also der Kollimator 21 wurde um 5° geneigt, um einen senkrechten Durchgang durch die Fokussieroptik 25 zu ermöglichen. Der Scheitelwinkel des Prismas betrug 7,68°. Aufgrund der brechenden Eigenschaft kann das Prisma 22 in zwei Winkelbereichen eingesetzt werden, um einen Strahlversatz in positive und negative Richtung zu ermöglichen.

Die linke Hälfte von Figur 4 zeigt den Strahlversatz in der Bearbeitungsebene, wenn das Prisma 22 aus der Stellung für symmetrischem Lichtdurchgang im Uhrzeigersinn gedreht wird, während die rechte Hälfte von Figur 4 den Strahlversatz in der Bearbeitungsebene zeigt, der sich ergibt, wenn das Prisma 22 im Gegenuhrzeigersinn gedreht wird. Für beide Situationen lässt sich eine Winkelstellung finden, die in Bezug auf die Lage des Messflecks in der Bearbeitungsebene ein Nullposition darstellt. Für die Drehung des Prismas 22 im Uhrzeigersinn liegt diese Winkelstellung bei etwa -58° gegenüber der Stellung für symmetrischem Lichtdurchgang und für die Drehung des Prismas 22 im Gegenuhrzeigersinn bei etwa 48°.

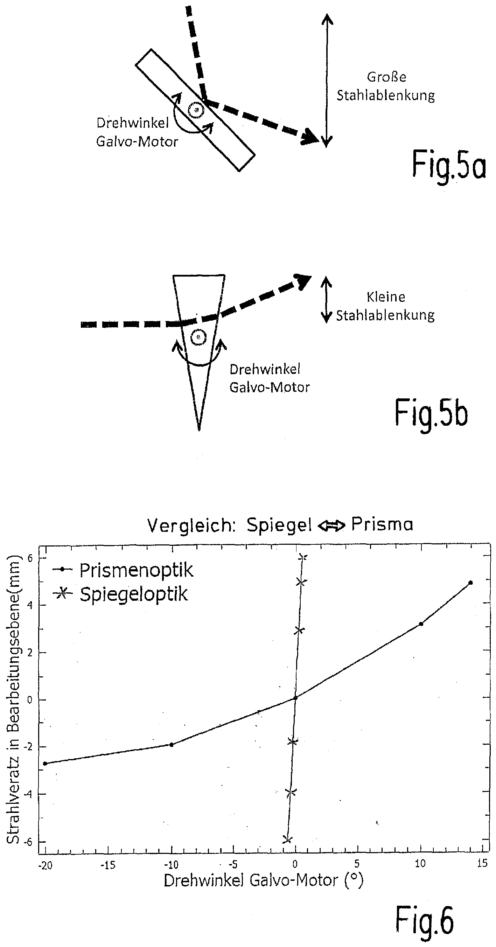

Während sich bei einer Spiegel-Ablenkeinheit bereits bei kleinen Drehwinkeln des Antriebs (Galvo-Motor) eine große Strahlablenkung ergibt, wie in Figur 5a dargestellt ist, erhält man mit einer Prismen-Ablenkeinheit auch bei relativ großen Drehwinkel des Antriebs und damit des Prismas eine relativ kleine Strahlablenkung wie in Figur 5b dargestellt ist. Figur 6 zeigt den Vergleich zwischen einem Prismen-Scanner und einem konventionellen Spiegel-Scanner. Aufgrund der optischen Untersetzung bei der Prismenoptik wird der Drehwinkel eines typischen Galvo-Motors nahezu vollständig ausgenutzt. Bei einer Spiegeloptik arbeitet der Antrieb lediglich in einem sehr begrenzten Winkelbereich, so dass Ungenauigkeiten und Driftbewegungen keine stabile Positionierung auf die Öffnung eines Keyholes in typischen Produktionsumgebungen ermöglichen.

Insbesondere zeigt Figur 6 den seitlichen oder lateralen Strahlversatz in der Bearbeitungsebene eines Laserbearbeitungskopfes mit einer Fokussier-Brennweite von f=300 mm als Funktion des Dreh- oder Kippwinkels einer Prismenoptik (Linie mit Punkten) und einer Spiegeloptik (Linie mit Kreuzen). Der Scheitelwinkel des Prismas beträgt 7,68°. Prisma und Spiegel sind im kollimierten Strahl angeordnet.

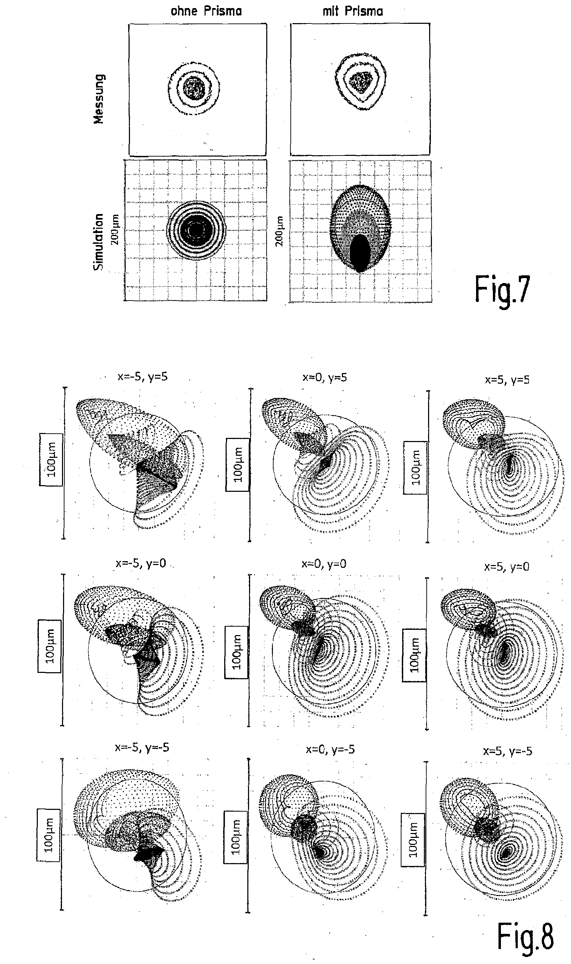

Aufgrund des wellenlängenabhängigen Brechungsindex kommt es beim Durchgang von spektral breitbandigem Messlicht zu einer chromatischen Aufspaltung. Figur 7 zeigt die gemessene und simulierte Intensitätsverteilung im Fokuspunkt eines Messstrahls, also des Messflecks, der durch eine Bearbeitungsoptik, also die Fokussieroptik eines Laserbearbeitungskopfes mit einer Fokussierbrennweite von f=300 mm fokussiert wurde. Gemäß der Erfindung besaß die benutzte Lichtquelle eine spektrale Breite von 40 nm. Bei der Messung ohne Prismen-Ablenkeinheit oder -Scanner zeigt sich im Fokus ein rundes gaußförmiges und beugungsbegrenztes Intensitätsprofil sowohl bei der Messung als auch bei der Simulation. Bei Verwendung eines Prismas im kollimierten Strahlengang, also bei einer Anordnung wie in Figur 2a gezeigt, ergibt sich eine geringe chromatische Aufspaltung. Das Strahlprofil kommt trotzdem nahe an die beugungsbegrenzte Intensitätsverteilung heran, so dass die Eignung des Messflecks für die Messung der Tiefe der Dampfkapillare gegeben ist.

Figur 8 zeigt simulierte Intensitätsverteilungen bei Verwendung von zwei im Winkel von 90° zueinander angeordneter Prismen 22, 23 (2D(zweidimensionaler)-Prismen-Scanner oder Ablenkeinheit) an unterschiedlichen Positionen in einem Abtastfeld in einer Bearbeitungsebene mit einer für die oben genannten Messaufgabe typischen Größe von etwa 10 mm x 10 mm. Unabhängig von der Abtastfeldposition zeigt das Strahlprofil eine Größe, die dem Beugungslimit nahe kommt, so dass der Messstrahl selbst wenn er zwei hintereinander angeordnete Prismen durchläuft vollständig in eine Keyholeöffnung fokussiert werden kann. Auch eine hohe laterale Auflösung bei Topographiemessungen ist möglich, da der Messfleckdurchmesser mit weniger als 100 $\mu$m eine geringe Größe aufweist. Durch die Verwendung zweier im 90° Winkel zueinander gedrehter Prismen 22, 23, wie in Figur 2b dargestellt, kann der Messlichtstrahl 14 an jede beliebige Position innerhalb des Abtastfeldes positioniert werden. Jedes Prisma lenkt den Messstrahl lediglich in einer Richtung ab.

Für die Abstandsmessung zur Bestimmung der Keyholetiefe wird der Messfleck mit den beiden Prismen 22, 23 der Prismen-Ablenkeinheit reproduzierbar abwechselnd auf das Keyhole auf das Werkstück 12 neben der Schweißnaht fokussiert. Die Prismen 22, 23 werden bei den jeweiligen Messungen statisch in den jeweiligen Positionen gehalten.

Bei Topographiemessungen im Vorlauf und im Nachlauf dient das eine Prisma 22 (oder 23) dazu, den Messfleck in den gewünschten Abtastbereich zu positionieren, während das andere Prisma 23 (oder 22) den Messlichtfleck bei seiner Drehung über den Abtastbereich führt.

Der erfindungsgemäße Einsatz eines Prisma in Kombination mit einem schnellen hochdynamischen Antrieb, wie beispielsweise einem Galvo-Motor, ermöglicht es eine an die Bedürfnisse bei der Prozessüberwachung beim Laserschweißen angepasste Strahlablenkung zu erhalten. Um eine zweidimensionale Ablenkeinheit zu realisieren, werden zwei Prismen im 90° Winkel zueinander angeordnet. Diese Ablenkeinheit in Kombination mit einem optischen Abstandsmesssystem, wie beispielsweise der Optischen Kohärenztomographie, ermöglicht es die eingangs genannten Messaufgaben zuverlässig durchzuführen. Ein wesentlicher Vorteil der Erfindung ist dabei, dass Driftbewegungen des Messstrahls in der Bearbeitungsebene deutlich reduziert werden können und dass der gesamten Drehwinkel des Antriebs aufgrund der optische Untersetzung durch die Prismenoptik ausgenutzt werden kann.

**Patentansprüche**

1.  Vorrichtung zur Prozessüberwachung bei der Laserbearbeitung, insbesondere beim Laserschweißen und Lasertiefschweißen, umfassend:

    - eine optische Abstandsmessvorrichtung, die eine Messlichtquelle zur Erzeugung eines Messlichtstrahls (14) aufweist, der auf eine Werkstückoberfläche zur Bildung eines Messlichtflecks fokussiert wird,

    **gekennzeichnet durch**:

    - eine Prismen-Ablenkeinheit (24), die zumindest ein Prisma (22) aufweist, das so um eine quer zum Messlichtstrahl (14) verlaufende Achse (28) drehbar gelagert ist, dass sich der Messlichtstrahl (14) zur Positionierung des Messlichtflecks auf der Werkstückoberfläche über den Kippwinkel des Prismas (22) relativ zur optischen Achse gezielt lateral verschieben lässt,

    wobei der Messlichtstrahl (14) so durch das zumindest eine Prisma (22) geführt ist, dass der Messlichtstrahl (14) nur an den brechenden Flächen des zumindest einen Prismas (22) umgelenkt wird, und wobei die Messlichtquelle zur Erzeugung eines spektral breitbandigen Messlichtstrahls eingerichtet ist.

2.  Vorrichtung nach Anspruch 1, **dadurch gekennzeichnet, dass** die Prismen-Ablenkeinheit (24) zwei Prismen (22, 23) aufweist, die im Winkel von 90° zueinander angeordnet sind, und die beide um eine quer zum Messlichtstrahl (14) verlaufende Achse drehbar gelagert sind.

3.  Vorrichtung nach Anspruch 1 oder 2, **dadurch gekennzeichnet, dass** das oder die Prismen (22, 23) von jeweils von einem Stellantrieb (22', 23') gedreht werden können, wobei die Stellantriebe (22', 23') unabhängig voneinander ansteuerbar sind.

**4.** Vorrichtung nach Anspruch 3, **dadurch gekennzeichnet, dass** als Stellantrieb (22', 23') ein Galvo-Motor vorgesehen ist.

**5.** Vorrichtung nach einem der vorstehenden Ansprüche, **dadurch gekennzeichnet, dass** die Prismen-Ablenkeinheit (24) in einem parallelen Abschnitt (14') des Messlichtstrahls (14) angeordnet ist, insbesondere zwischen einer Kollimatoroptik (21) und einer Fokussieroptik (26).

**6.** Vorrichtung nach Anspruch 5, **dadurch gekennzeichnet, dass** die Kollimatoroptik (21) gegen die optische Achse der Fokussieroptik (26) geneigt ist.

**7.** Vorrichtung nach einem der vorstehenden Ansprüche, **dadurch gekennzeichnet, dass** das oder die Prismen (22, 23) der Prismen-Ablenkeinheit (24) mit einer oder mehreren Antireflexschichten versehen sind, wobei die Transmission der Antireflexschichten für einen großen Winkelbereich ausgelegt sind.

**8.** Laserbearbeitungskopf (10), durch den ein Bearbeitungslaserstrahl (11) geführt ist und in dem eine Fokussieroptik (26) angeordnet ist, die den Bearbeitungslaserstrahl (11) in einen Arbeitsfokus auf einem Werkstück (12) fokussiert, mit einer Vorrichtung nach einem der vorstehenden Ansprüchen zur Prozessüberwachung bei der Laserbearbeitung, insbesondere beim Laserschweißen und Lasertiefschweißen, wobei der Messlichtstrahl (14) dem Bearbeitungslaserstrahl (11) überlagert ist.

**9.** Laserbearbeitungskopf (10) nach Anspruch 8, **dadurch gekennzeichnet, dass** der Messlichtstrahl über einen Strahlteiler (25) in den Bearbeitungslaserstrahl (11) eingekoppelt ist, und dass die Prismen-Ablenkeinheit (24) zwischen einer Kollimatoroptik (21) und dem Strahlteiler (25) angeordnet ist.

## Claims

**1.** A device for process monitoring during laser machining, particularly laser welding and laser deep welding, comprising:

- an optical distance measuring device which comprises a measurement light source for generating a measurement light beam (14) which is focused on a workpiece surface in order to form a measurement light spot,

**characterized by**:

- a prism deflection unit (24) with at least one prism (22), which is mounted so as to be rotatable about an axis (28) extending transversely to the measurement light beam (14) in such a way that the measurement light beam (14) can be purposefully shifted laterally relative to the optical axis by means of the tilting angle of the prism (22) in order to position the measurement light spot on the workpiece surface, wherein the measurement light beam (14) is guided through the at least one prism (22) in such a way that the measurement light beam (14) is only deflected on the refracting faces of the least one prism (22), and wherein the measurement light source is configured to generate a spectrally broadband measurement light beam.

**2.** The device according to claim 1, **characterized in that** the prism deflection unit (24) comprises two prisms (22, 23) which are arranged at an angle of 90° relative to one another and both mounted so as to be rotatable about an axis extending transverse to the measurement light beam (14).

**3.** The device according to claim 1 or 2, **characterized in that** the prism or prisms (22, 23) can be respectively rotated by means of an actuating drive (22', 23'), wherein the actuating drives (22', 23') can be activated independently of one another.

**4.** The device according to claim 3, **characterized in that** a galvo-motor is provided as actuating drive (22', 23').

**5.** The device according to one of the preceding claims, **characterized in that** the prism deflection unit (24) is arranged in a parallel section (14') of the measurement light beam (14), particularly between collimator optics (21) and focusing optics (26).

**6.** The device according to claim 5, **characterized in that** the collimator optics (21) are inclined relative to the optical axis of the focusing optics (26).

7. The device according to one of the preceding claims, **characterized in that** the prism or prisms (22, 23) of the prism deflection unit (24) are provided with one or more antireflection layers, wherein the transmission of the antireflection layers is configured for a broad angular range.

8. A laser machining head (10), through which a machining laser beam (11) is guided and in which focusing optics (26) are arranged that focus the machining laser beam (11) in a working focal point on a workpiece (12), comprising a device for process monitoring during laser machining, particularly laser welding and laser deep welding, according to one of the preceding claims, wherein the measurement light beam (14) is superimposed with the machining laser beam (11).

9. The laser machining head (10) according to claim 8, **characterized in that** the measurement light beam is coupled into the machining laser beam (11) by means of a beam splitter (25), and **in that** the prism deflection unit (24) is arranged between collimator optics (21) and the beam splitter (25).

## Revendications

1. Dispositif de surveillance de processus pendant un usinage au laser, en particulier pendant un soudage au laser et un soudage profond au laser, comportant :

   - un dispositif de mesure de distance optique comportant une source lumineuse de mesure pour générer un faisceau lumineux de mesure (14) qui est focalisé sur une surface de pièce afin de former un spot lumineux de mesure,

   **caractérisé par** :

   - une unité de déviation à prismes (24) comportant au moins un prisme (22) qui est monté de façon à pouvoir tourner autour d'un axe (28) s'étendant transversalement au faisceau lumineux de mesure (14), de telle sorte que le faisceau lumineux de mesure (14) peut être décalé de manière latéralement ciblée par rapport à l'axe optique au moyen de l'angle d'inclinaison du prisme (22) afin de positionner le spot lumineux de mesure sur la surface de pièce,

   dans lequel le faisceau lumineux de mesure (14) est guidé à travers le au moins un prisme (22) de telle sorte que le faisceau lumineux de mesure (14) est dévié uniquement sur les surfaces réfringentes du au moins un prisme (22), et dans lequel la source lumineuse de mesure est conçue pour générer un faisceau lumineux de mesure à large bande spectrale.

2. Dispositif selon la revendication 1, **caractérisé en ce que** l'unité de déviation à prismes (24) comporte deux prismes (22, 23) qui sont agencés à un angle de 90° l'un par rapport à l'autre, et les deux prismes sont montés de façon à pouvoir tourner autour d'un axe s'étendant transversalement au faisceau lumineux de mesure (14).

3. Dispositif selon la revendication 1 ou 2, **caractérisé en ce que** le ou les prismes (22, 23) peuvent respectivement être mis en rotation par un actionneur (22', 23'), dans lequel les actionneurs (22', 23') peuvent être commandés indépendamment l'un de l'autre.

4. Dispositif selon la revendication 3, **caractérisé en ce que** un moteur galvanométrique est prévu en tant qu'actionneur (22', 23').

5. Dispositif selon l'une des revendications précédentes, **caractérisé en ce que** l'unité de déviation à prismes (24) est agencée dans une portion parallèle (14') du faisceau lumineux de mesure (24), en particulier entre une optique de collimation (21) et une optique de focalisation (26).

6. Dispositif selon la revendication 5, **caractérisé en ce que** l'optique de collimation (21) est inclinée par rapport à l'axe optique de l'optique de focalisation (26).

7. Dispositif selon l'une des revendications précédentes, **caractérisé en ce que** le ou les prismes (22, 23) de l'unité de déviation à prismes (24) sont pourvus d'une ou plusieurs couches antiréflexion, dans lequel la transmission des couches antiréflexion est configurée pour une plage angulaire étendue.

8. Tête d'usinage au laser (10), à travers laquelle est guidé un faisceau laser d'usinage (11) et dans laquelle est agencée une optique de focalisation (26) qui focalise le faisceau laser d'usinage (11) en un point focal de travail sur une pièce (12), comportant un dispositif selon l'une des revendications précédentes pour la surveillance de processus pendant un usinage au laser, en particulier pendant un soudage au laser et un soudage profond au laser, dans laquelle le faisceau lumineux de mesure (14) est superposé au faisceau laser d'usinage (11).

9. Tête d'usinage au laser (10) selon la revendication 8, **caractérisée en ce que** le faisceau lumineux de mesure est couplé dans le faisceau laser d'usinage (11) au moyen d'un séparateur de faisceau (25), et **en ce que** l'unité de déviation à prismes (24) est agencée entre une optique de collimation (21) et le séparateur de faisceau (25).

Fig.1

Fig.2a

Fig.2b

22,23

28

δ

γ

22", 23"

Fig.3

Strahlversatz in Bearbeitungsebene (mm)

21

22

25

26

27

Prismen-Kippwinkel (°)

Fig.4

Drehwinkel
Galvo-Motor

Große
Stahlablenkung

Fig.5a

Kleine
Stahlablenkung

Drehwinkel
Galvo-Motor

Fig.5b

Vergleich: Spiegel ⟺ Prisma

Fig.6

ohne Prisma  mit Prisma

Messung

Simulation

200μm  200μm

Fig.7

x=-5, y=5  x=0, y=5  x=5, y=5

100μm  100μm  100μm

x=-5, y=0  x=0, y=0  x=5, y=0

100μm  100μm  100μm

x=-5, y=-5  x=0, y=-5  x=5, y=-5

100μm  100μm  100μm

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015039741 A1
- DE 4026130 C2
- DE 4441341 C2
- DE 102008032751 B3
- DE 202008017745 U1
- DE 4391446 C2
- DE 19817851 C1
- DE 102016005021 A1
- JP 10034366 A